Europäisches Patentamt

**European Patent Office**

**Office européen des brevets**

(11) Numéro de publication: **0 038 761**
**A1**

## (12) DEMANDE DE BREVET EUROPEEN

(21) Numéro de dépôt: **81400625.0**

(22) Date de dépôt: **17.04.81**

(51) Int. Cl.³: **B 61 D 15/12**
**B 61 D 17/04**

(30) Priorité: **17.04.80 FR 8008615**

(43) Date de publication de la demande:
**28.10.81 Bulletin 81/43**

(84) Etats contractants désignés:
**AT BE CH DE GB IT LI NL SE**

(71) Demandeur: **ASEA Société Anonyme dite**
**22, rue du 8 Mai 1945**
**F-95340 Persan(FR)**

(72) Inventeur: **Aubriet, Jacques**
**21, Allée Diane**
**F-95440 Ecouen(FR)**

(74) Mandataire: **Blétry, Robert et al,**
**OFFICE BLETRY 2, Boulevard de Strasbourg**
**F-75010 Paris(FR)**

(54) **Châssis en deux parties démontables pour véhicule automoteur lesté et mobile sur rail.**

(57) Le véhicule comprend un châssis inférieur (1) sur lequel sont montés les organes d'entraînement (34) et les essieux (32) des roues (31) du véhicule, et un châssis supérieur (2) comportant un caisson (4) capable de recevoir un lest. Afin d'éviter que les moments dûs aux forces d'inertie du châssis supérieur (2) chargé du lest ne soient transmis au châssis inférieur (1) et afin de permettre l'aménagement aisé d'un poste latéral de conduite, le châssis supérieur (2) comporte au moins une poutre horizontale (5) qui s'étend longitudinalement dans la partie centrale du caisson (4) et aux extrémités de laquelle sont encastrées deux jambes (3) qui forment un portique avec ladite poutre horizontale longitudinale (5) et qui prennent appui sur le châssis inférieur (1) auquel elles sont fixées par une liaison ne formant pas encastrement.

./...

EP 0 038 761 A1

Croydon Printing Company Ltd.

FIG.1

La présente invention concerne un châssis en deux parties démontables pour véhicule automoteur lesté et mobile sur rail, du type comprenant un châssis inférieur sur lequel sont montés les organes d'entraînement et les essieux des roues du véhicule, et un châssis supérieur comportant un caisson capable de recevoir un lest, et qui est supporté à une distance prédéterminée au-dessus du châssis inférieur.

Dans le domaine de la manutention des wagons, on connaît déjà des petits véhicules automoteurs qui peuvent être conduits par un machiniste situé à bord du véhicule ou qui peuvent être télécommandés par un machiniste situé à distance du véhicule. Du fait de leurs dimensions et de leur poids relativement faible (par rapport à une locomotive ou à un locotracteur classique), ces véhicules automoteurs doivent être fortement lestés pour qu'ils soient capables d'entraîner des wagons. Etant donné que le moteur et les organes de transmission de la force motrice sont habituellement montés sur la partie inférieure du châssis et doivent rester facilement accessibles pour les opérations d'entretien, le lest, qui est habituellement constitué par une masse de ferraille ou de béton de 20 à 30 tonnes environ, est placé dans la partie supérieure du châssis qui se présente sous la forme d'un caisson. Dans les véhicules automoteurs connus de ce type, le caisson repose à chacune de ses extrémités avant et arrière sur la partie supérieure d'une structure de support à laquelle il est fixé. Chaque structure de support est encastrée à sa partie inférieure au châssis inférieur. Or, étant donné que le lest est situé à la partie supérieure du véhicule, on conçoit aisément que, lors d'un tamponnement, les forces d'inertie proviennent essentiellement de cette partie supérieure. Ces forces d'inertie se répercutent sur les structures de support qui, du fait qu'elles sont encastrées à leur partie inférieure au châssis inférieur transmettent des moments très importants à ce dernier. Il en résulte donc que le châssis inférieur doit être extrêmement rigide pour résister aux moments très importants qui lui sont appliqués lors d'un tamponnement, ce qui augmente le prix de revient du véhicule.

En outre, dans les véhicules automoteurs antérieurement connus de ce type, chaque structure de support comporte au moins deux montants dont l'écartement est tel qu'il oblige à augmenter la largeur du véhicule si l'on veut pouvoir installer un poste latéral de conduite pour le machiniste.

La présente invention a donc pour but de fournir un châssis pour véhicule automoteur lesté et mobile sur rail, dans lequel le châssis inférieur peut être d'une conception plus légère que celle des châssis des véhicules automoteurs connus sans nuire à la rigidité et à la résistance de l'ensemble du châssis, et dans lequel un poste latéral de conduite peut être facilement aménagé pour le machiniste tout en ayant un véhicule de largeur relativement faible.

A cet effet, le châssis selon la présente invention est caractérisé en ce que le châssis supérieur comporte au moins une poutre horizontale qui s'étend longitudinalement dans la partie centrale du caisson et aux extrémités de laquelle sont encastrées deux jambes qui forment un portique avec ladite poutre horizontale longitudinale et qui prennent appui sur le châssis inférieur auquel elles sont fixées par une liaison ne formant pas encastrement.

Suivant une forme d'exécution de l'invention, le châssis supérieur peut comporter deux poutres horizontales longitudinales parallèles, par exemple à section en I, qui sont espacées d'une distance correspondant à la largeur des jambes et aux extrémités desquelles sont encastrées lesdites jambes.

Du fait que les deux jambes sont encastrées aux deux poutres longitudinales du châssis supérieur et qu'elles prennent appui sur le châssis inférieur sans y être encastrées, un moment très faible dû aux forces d'inertie de la partie supérieure du châssis est transmis par les jambes au châssis inférieur lors d'un tamponnement. En conséquence, le châssis inférieur peut être d'une conception beaucoup plus allégée qu'auparavant. Il suffit que seul le châssis supérieur avec les deux jambes soit convenablement dimensionné pour résister aux moments importants qui lui sont appliqués lors d'un tamponnement. Mais, même auparavant, le châssis supérieur et les structures de support devaient être fortement dimensionnés pour supporter le poids du lest, de sorte que les modifications de structure apportées par la présente invention au châssis supérieur du véhicule n'augmentent pas de manière notable le coût de fabrication du châssis supérieur et, de toute façon, la faible augmentation de coût est largement compensée par le gain procuré par l'allègement de la structure du châssis inférieur. En outre, grâce à la présence d'une unique jambe à chaque extrémité du châssis inférieur, un poste latéral de conduite peut être facilement aménagé d'un côté ou de l'autre de l'une des deux jambes sans qu'il soit nécessaire d'augmenter la largeur du véhicule.

On décrira maintenant une forme d'exécution de la présente invention en faisant référence aux dessins annexés sur lesquels :

La figure 1 est une vue en élévation latérale du châssis selon l'invention.

La figure 2 est une vue en bout, à échelle agrandie, du châssis représenté sur la figure 1.

La figure 3 est une vue en coupe, à échelle encore agrandie, suivant la ligne III-III de la figure 2.

La figure 4 est une vue en coupe, à la même échelle que la figure 3, suivant la ligne IV-IV de la figure 2.

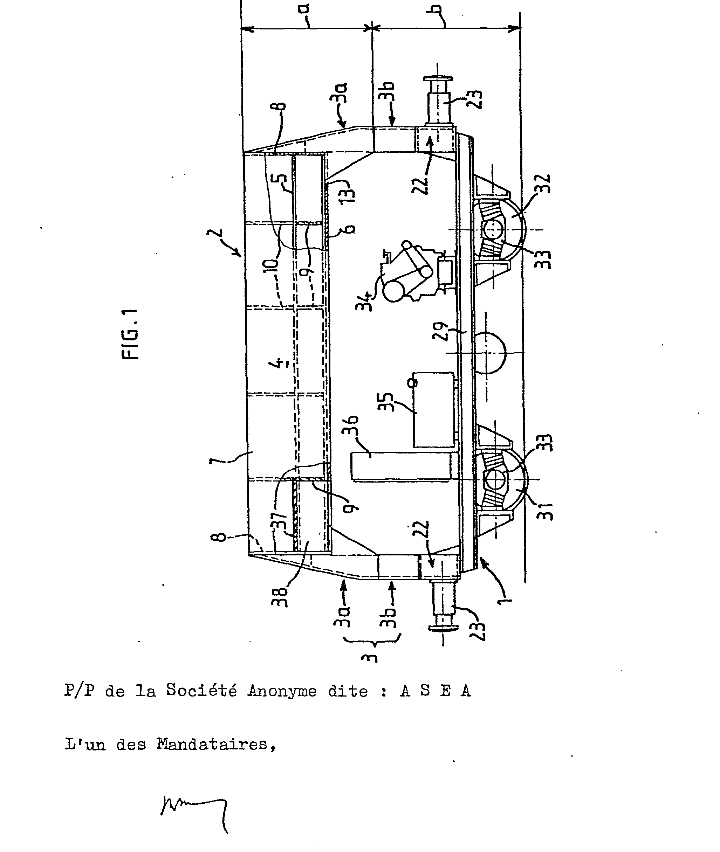

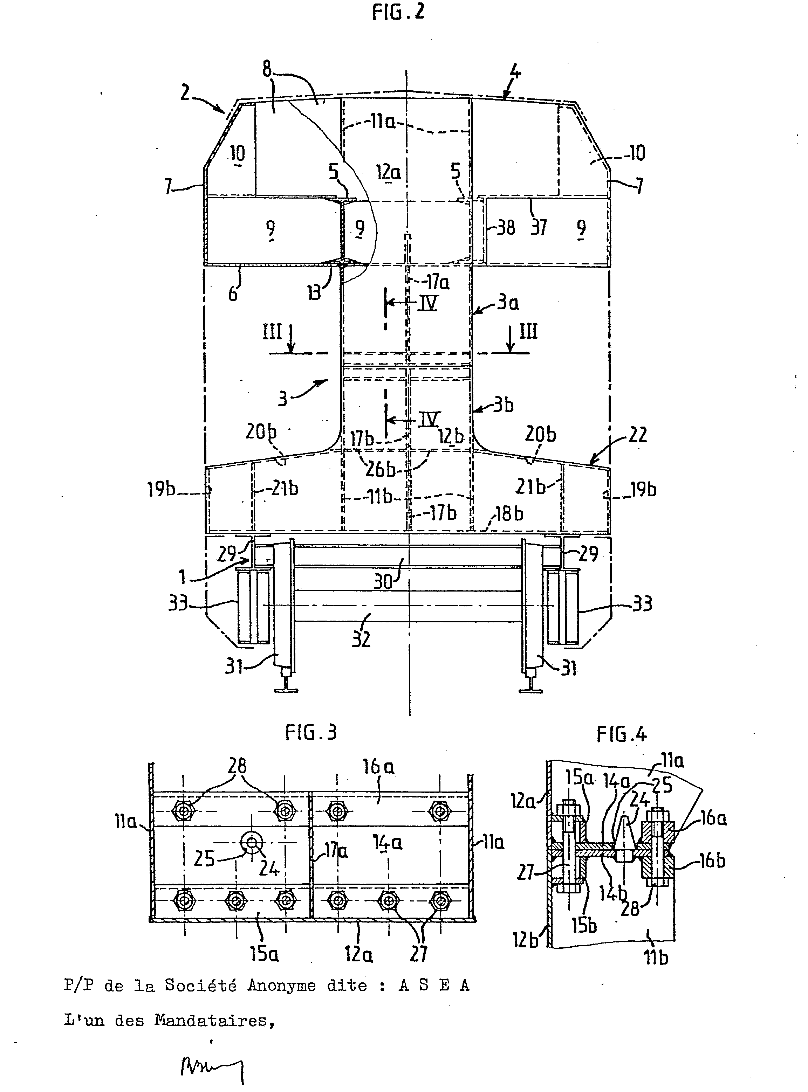

Le châssis représenté sur les figures 1 et 2 comprend essentiellement un châssis inférieur 1 et un châssis supérieur 2 muni , à chacune de ses extrémités, d'une jambe 3 qui prend appui sur l'une des extrémités du châssis inférieur 1 auquel elle est fixée.

Le châssis supérieur 2 comporte un caisson 4 de forme approximativement parallélépipédique, qui est destiné à recevoir un lest, par exemple une masse de ferraille ou une masse de béton. L'ossature principale du caisson 4 est constituée par deux poutres horizontales parallèles 5 à section en I, qui s'étendent longitudinalement dans la partie centrale du caisson 4. Une plaque de tôle 6, soudée à la partie inférieure des deux poutres 5 forme le fond du caisson 4. Deux autres plaques de tôle 7, soudées le long de leurs bords longitudinaux inférieurs aux bords longitudinaux de la plaque 6 forment les parois latérales du caisson 4. Deux autres plaques de tôle 8, respectivement soudées aux extrémités des deux poutres 5, aux bords transversaux de la plaque 6 et aux bords verticaux des plaques 7 forment les parois d'extrémité avant et arrière du caisson 4. Des plaques de tôle 9, de forme approximativement rectangulaires, sont soudées le long de leurs bords inférieurs à la plaque 6 et le long de leurs bords verticaux aux deux poutres 5 ou à l'une des poutres 5 et à l'une des plaques 7. Les plaques 9 ménagent entre elles des compartiments destinés à recevoir le lest et, lorsque ce dernier est constitué par de la ferraille, elles empêchent les morceaux de ferraille de se déplacer longitudinalement à l'intérieur du caisson 4 en cas de tamponnement, de façon à maintenir ainsi une distribution uniforme du lest à l'intérieur du caisson 4. Des plaques 10, de forme approximativement triangulaires, sont soudées aux plaques 9 et aux plaques 7 afin de renforcer ces dernières.

Chaque jambe 3 est encastrée, à sa partie supérieure, à l'une des extrémités des deux poutres 5 et prend appui, à son extrémité inférieure, sur le châssis inférieur 1 auquel elle est fixée. Afin de faciliter le transport du véhicule automoteur sur route ou par voie ferrée par des moyens ordinaires, c'est-à-dire sans nécessiter un convoi exceptionnel, une remorque ou un wagon à plate-forme surbaissée, chaque jambe 3 est de préférence réalisée en deux parties 3a et 3b reliées entre elles de manière détachable de telle manière que, après séparation des deux parties des jambes 3, le châssis supérieur 2 avec la partie supérieure 3a des jambes et le châssis inférieur 1 avec la partie inférieure 3b des jambes puissent être transportés l'un derrière l'autre sur une même plate-forme sans dépasser les limites du gabarit autorisé. Comme montré sur la figure 1, la hauteur $\underline{a}$ du châssis supérieur 2 avec la partie supérieure $3\underline{a}$ des jambes est sensiblement égale à la hauteur $\underline{b}$ du châssis inférieur 1 avec les partis inférieures $3\underline{b}$ des jambes, ces deux hauteurs $\underline{a}$ et $\underline{b}$ étant environ égales à 1,7 m.

Comme montré sur la figure 1, la partie inférieure $3\underline{b}$ de chaque jambe 3 est verticale, tandis que la partie supérieure $3\underline{a}$ est inclinée de bas en haut vers l'intérieur du châssis. Comme cela est plus particulièrement visible sur les figures 2 et 3, la partie supérieure $3\underline{a}$ de chaque jambe 3 comprend deux plaques verticales parallèles $11\underline{a}$ qui sont espacées d'une distance correspondant à l'espacement des deux poutres 5, et une plaque $12\underline{a}$ perpendiculaire aux plaques $11\underline{a}$ et soudée à celles-ci de manière à former avec elles une structure creuse à section en U. Le bord de chaque plaque verticale $11\underline{a}$ qui est tourné vers le caisson 4 présente une partie verticale et une partie horizontale comme cela est visible sur la figure 1, et il est soudé, le long de sa partie verticale, à l'une des deux plaques d'extrémité 8 du caisson 4 et, le long de sa partie horizontale, à l'aile inférieure de l'une des deux poutres 5 à section en I, des encoches 13 étant prévues dans la plaque de fond 6 pour permettre le soudage des plaques $11\underline{a}$ aux poutres 5. On notera que la liaison ainsi réalisée entre la partie supérieure $3\underline{a}$ de chaque jambe 3 et les deux poutres 5 forme un encastrement, et que l'ensemble des deux poutres 5 et des jambes 3 forme un portique capable de bien résister aux moments importants dûs aux forces d'inertie qui lui sont appliqués en cas de tamponnement.

A son extrémité inférieure, la partie supérieure $3\underline{a}$ de la jambe 3 est pourvue d'une plaque horizontale $14\underline{a}$ qui est soudée aux deux plaques $11\underline{a}$ et à la plaque $12\underline{a}$. A la plaque $14\underline{a}$ sont soudées des ferrures de renfort $15\underline{a}$ et $16\underline{a}$ qui s'étendent transversalement entre les deux plaques $11\underline{a}$ auxquelles elles sont également soudées comme montré sur les figures 3 et 4. La partie supérieure $3\underline{a}$ de chaque jambe 3 comporte en outre une plaque verticale de renfort 17a qui est parallèle aux deux plaques 11a. à égale distance de ces deux plaques, et qui est soudée aux plaques 12a et 14a et à l'une des deux plaques d'extrémité 8 du caisson 4.

La partie inférieure 3b de chaque jambe 3 comporte deux plaques verticales parallèles 11b qui sont respectivement dans l'alignement vertical des deux plaques 11a, et une plaque 12b qui est dans l'alignement vertical de la plaque 12a et qui est soudée aux deux plaques 11b de manière à former avec elle une structure à section en U. Comme montré sur la figure 2, la plaque 12b est découpée en forme de T renversé. Une plaque horizontale 18b est soudée à la plaque 12b le long du bord inférieur de sa branche horizontale et aux deux plaques 11b le long de leur bord inférieur. Deux plaques verticales 19b sont soudées perpendiculairement à la plaque 12b le long des bords verticaux de sa branche horizontale et perpendiculairement à la plaque 18b le long de ses bords d'extrémité. Deux autres plaques 20b, légèrement inclinées par rapport à l'horizontale, sont soudées perpendiculairement à la plaque 12b le long des bords supérieurs de sa branche horizontale de part et d'autre de sa branche verticale. Chaque plaque 20b est également soudée au bord supérieur de l'une des deux plaques 19b et à l'une des deux plaques 11b approximativement à mi-hauteur de celle-ci. Deux plaques verticales de renfort 21b, parallèles aux plaques 11b et 19b, sont soudées aux plaques 12b, 18b et 20b. L'ensemble des plaques 18b, 19b, 20b et 21b constitue avec les parties inférieures des plaques 11b et 12b un large pied transversal 22 en forme de poutre-caisson, qui fait partie intégrante de la partie inférieure 3b de la jambe 3 et qui prend appui sur le châssis inférieur 1 auquel il est fixé comme on le verra plus loin. Comme montré sur la figure 1, des tampons 23 sont fixés aux pieds 22 des deux jambes 3.

A son extrémité supérieure, la partie inférieure 3b de chaque jambe 3 est pourvue d'une plaque horizontale 14b qui est soudée aux deux plaques 11b et à la plaque 12b le long de leurs bords supérieurs. Des ferrures de renfort 15b et 16b, semblables aux ferrures de renfort 15a et 16a, sont soudées aux plaques 11b et 14b, la ferrure 15b étant en outre soudée à la plaque 12b comme montré sur la figure 4. La plaque 14b est en outre pourvue d'un téton conique de positionnement 24 qui est engagé dans un trou 25 de la plaque 14a (figures 3 et 4). Une plaque verticale de renfort 17b (figure 2), alignée verticalement avec la plaque 17a, est soudée aux plaques 12b, 14b et 18b. Deux plaques horizontales de renfort 26b soudées aux plaques 11b au même niveau que les plaques 20b et également soudées aux plaques 12b et 17b complètent la structure en forme de poutre-caisson du pied 22.

Comme montré sur les figures 3 et 4, les parties supérieure et inférieure 3a et 3b de chaque jambe 3 sont reliées entre elles de manière détachable au moyen de deux rangées de vis 27 et 28 et leurs écrous. Chaque vis 27 traverse des trous alignés formés dans les plaques 14a et 14b et dans les ferrures 15a et 15b, tandis que chaque vis 28 traverse des trous alignés formés dans les plaques 14a et 14b et dans les ferrures 16a et 16b. On notera que la liaison ainsi obtenue entre les parties supérieure et inférieure 3a et 3b de chaque jambe 3 forment un encastrement capable de résister aux moments importants de flexion auxquels les jambes 3 sont soumises par suite des forces importantes d'inertie lors d'un tamponnement.

Comme indiqué plus haut, le pied 22 de chaque jambe 3 prend simplement appui sur le châssis inférieur 1 auquel il est fixé par une liaison ne formant pas encastrement afin que les moments importants de flexion auxquels les jambes 3 sont soumises lors d'un tamponnement ne soient pas transmis au châssis inférieur 1. Dans ces conditions, ce dernier peut être simplement constitué par deux longerons parallèles 29 convenablement entretoisés par des traverses 30. Les longerons 29 et les traverses 30 peuvent être par exemple constitués par des profilés à section en H. A chacune de leurs extrémités, les longerons 29 sont soudés à la plaque inférieure 18b de l'un ou l'autre des deux pieds 22, sous cette plaque 18b et dans l'alignement vertical de l'une des deux plaques verticales de renfort 21b du pied 22 comme montré sur la figure 2.

Les longerons 29 sont situés à l'extérieur des roues 31 dont les essieux 32 sont montés sur le châssis inférieur 1 par l'intermédiaire de dispositifs de suspension classiques 33 qui sont fixés aux longerons 29 au-dessous de ceux-ci. Les longerons 29 supportent en outre le moteur 34 d'entraînement du véhicule, par exemple un moteur Diesel avec son réservoir de carburant 35, les organes de transmission de la force motrice du moteur 34 aux roues 31, par exemple une transmission hydrostatique (non montrée), et une armoire électrique 36 contenant les organes électriques de contrôle et de commande du véhicule.

Grâce au fait que le châssis supérieur 2 est relié au châssis inférieur 1 par une unique jambe 3 à chaque extrémité du véhicule, un poste latéral de conduite pour un machiniste peut être facilement aménagé à côté de l'une des deux jambes 3. Toutefois, comme la hauteur entre les longerons 29 du châssis inférieur 1 et la plaque inférieure 6 du caisson 4 est habituellement insuffisante pour permettre à un homme de se tenir debout dans l'espace compris entre les longerons 29 et le caisson 4, un renfoncement ouvert vers le bas et vers l'extérieur peut être prévu dans la partie inférieure du caisson 4 à côté de l'une des deux jambes 3. Ceci peut être obtenu en découpant une partie rectangulaire dans l'angle inférieur gauche de la plaque 7 (vue dans la figure 1), une autre partie rectangulaire dans l'angle inférieur droit de la plaque 8 (vue dans la figure 2) et une autre partie rectangulaire dans l'angle de la plaque inférieure 6 du caisson 4 qui est adjacent aux angles susmentionnés des plaques 7 et 8. Une plaque horizontale 37, soudée aux plaques 7, 8 et 9 et à la poutre 5,forme le fond du renfoncement susmentionné et en même temps le plafond du poste de conduite, tandis qu'une plaque verticale 38, soudée aux plaques 6, 8, 9 et 37, forme avec la plaque 9 les parois verticales dudit renfoncement.

La hauteur entre la plaque horizontale 37 et une autre plaque horizontale (non montrée),fixée sur les longerons 29 et formant le plancher du poste de conduite, est d'environ 2 m, soit une hauteur suffisante pour permettre à un homme de se tenir debout, de sorte qu'un poste latéral de conduite peut être facilement aménagé à cet endroit. On conçoit aisément qu'il eût été beaucoup plus difficile d'aménager un poste de conduite à cet endroit sans augmenter la largeur du véhicule, si le châssis supérieur avait été relié au châssis inférieur par deux montants verticaux à chaque extrémité comme cela est habituellement le cas dans les véhicules automoteurs connus. Par contre, grâce à la jambe unique, un poste de conduite d'environ 0,8 m de large peut être aménagé à l'endroit susmentionné tout en maintenant la largeur du véhicule inférieure à 2,5 m.

Il va de soi que la forme d'exécution de la présente invention qui a été décrite ci-dessus a été donnée à titre d'exemple purement indicatif et nullement limitatif, et que de nombreuses modifications peuvent être facilement apportées par l'homme de l'art sans pour autant sortir du cadre de la présente invention. C'est ainsi notamment que, au lieu de prévoir deux poutres 5 à section en I, on peut par exemple prévoir une unique poutre à section en U, en C ou en Ω, ayant une largeur correspondant à la largeur des jambes 3, c'est-à-dire à la distance entre les plaques 11a.

NEUF PAGES.-

P/P de la Société Anonyme dite : A S E A

L'un des Mandataires,

R E V E N D I C A T I O N S
====================================

1.- Châssis en deux parties démontables pour véhicule automoteur lesté et mobile sur rail, comprenant un châssis inférieur (1) sur lequel sont montés les organes d'entraînement (34) et les essieux (32) des roues (31) du véhicule, et un châssis supérieur (2) comportant un caisson (4) capable de recevoir un lest, et qui est supporté à une distance prédéterminée au-dessus du châssis inférieur (1), caractérisé en ce que le châssis supérieur (2) comporte au moins une poutre horizontale (5) qui s'étend longitudinalement dans la partie centrale du caisson (4) et aux extrémités de laquelle sont encastrées deux jambes (3) qui forment un portique avec ladite poutre horizontale longitudinale (5) et qui prennent appui sur le châssis inférieur (1) auquel elles sont fixées par une liaison ne formant pas encastrement.

2.- Châssis selon la revendication 1, caractérisé en ce que le châssis supérieur (2) comporte deux poutres horizontales longitudinales parallèles (5) à section en I, qui sont espacées d'une distance correspondant à la largeur des jambes (3).

3.- Châssis selon la revendication 1 ou 2, dans lequel le châssis inférieur (1) comporte deux longerons parallèles (29), caractérisé en ce que chaque jambe (3) est munie, à son extrémité inférieure, d'un large pied transversal (22) qui fait partie intégrante de la jambe (3) et qui prend appui et est fixé sur les deux longerons (29) à l'une des extrémités de ceux-ci.

4.- Châssis selon l'une quelconque des revendications 1 à 3, caractérisé en ce que chaque jambe (3) comporte une partie supérieure (3a) et une partie inférieure (3b) qui sont reliées entre elles de manière détachable par une liaison (14a, 14b, 15a, 15b, 16a, 16b, 27, 28) formant encastrement.

5.- Châssis selon la revendication 4, caractérisé en ce que la partie inférieure (3b) de chaque jambe (3) est verticale, tandis que sa partie supérieure (3a) est inclinée de bas en haut vers l'intérieur du châssis.

6.- Châssis selon la revendication 4 ou 5, caractérisé en ce que la hauteur du châssis supérieur (2) avec les parties supérieures (3a) des jambes (3) est sensiblement égale à la hauteur du châssis inférieur (1) avec les parties inférieures (3b) des jambes (3).

7.- Châssis selon l'une quelconque des revendications précédentes, caractérisé en ce qu'un renfoncement ouvert vers le bas et vers l'extérieur est prévu dans la partie inférieure du caisson (4) à côté de l'une des deux jambes (3).

DEUX PAGES.-

P/P de la Société Anonyme dite : A S E A

L'un des Mandataires,

FIG.1

0038761

2/2

FIG.2

FIG.3

FIG.4

P/P de la Société Anonyme dite : A S E A

L'un des Mandataires,

Office européen
des brevets

**RAPPORT DE RECHERCHE EUROPEENNE**

**0038761**
Numéro de la demande

EP 81 40 0625

| Catégorie | Citation du document avec indication, en cas de besoin, des parties pertinentes | Revendica-tion concernée |
|---|---|---|
| A | GB - A - 150 675 (PETIT)<br>* Entier * | 1 |
| A | FR - A - 643 745 (MOORE et al.)<br>* Entier * | 1 |
| A | US - A - 1 751 924 (KASPER)<br>* Entier * | 1 |

**DOCUMENTS CONSIDERES COMME PERTINENTS**

**CLASSEMENT DE LA DEMANDE (Int. Cl.³)**

B 61 D 15/12
17/04

**DOMAINES TECHNIQUES RECHERCHES (Int. Cl.³)**

B 61 D
B 61 C

**CATEGORIE DES DOCUMENTS CITES**

X: particulièrement pertinent
A: arrière-plan technologique
O: divulgation non-écrite
P: document intercalaire
T: théorie ou principe à la base
de l'invention
E: demande faisant interférence
D: document cité dans
la demande
L: document cité pour d'autres
raisons

&: membre de la même famille,
document correspondant

Le présent rapport de recherche a été établi pour toutes les revendications

| Lieu de la recherche | Date d'achèvement de la recherche | Examinateur |
|---|---|---|
| La Haye | 23-07-1981 | HEROUAN |

OEB Form 1503.1 06.78